# EUROPEAN PATENT SPECIFICATION

(11) **EP 0 228 878 B1**
(45) Date of publication and mention of the grant of the patent: **24.02.1993**
(21) Application number: 86309929.7
(22) Date of filing: 18.12.1986
(51) Int. Cl.: H04N 5/783, G11B 27/00

(54) **Edit mode controllers and editing methods for operation with recording and/or reproducing apparatuses**
Steuereinrichtung und Verfahren zur Datenkopierung (Schneiden) bei Aufnahme- und/oder Wiedergabegeräten
Controlleurs et méthodes d'édition utilisés avec des appareils d'enregistrement et/ou de reproduction

(30) Priority: 18.12.1985 JP 284559/85
(43) Date of publication of application: 15.07.1987
(73) Proprietor: SONY CORPORATION, Tokyo 141 (JP)
(72) Inventor: Sekimoto, Satoshi Patents Division, Shinagawa-ku Tokyo 141 (JP); Saito, Seiji Patents Division, Shinagawa-ku Tokyo 141 (JP)
(74) Representative: Cotter, Ivan John

(56) References cited:
- EP-A- 0 077 692
- EP-A- 0 191 473
- GB-A- 2 087 623
- PATENT ABSTRACTS OF JAPAN, vol. 9, no. 227, 13th September 1985, (P-388)(1950); & JP-A- 60 083 268 (FUJI) 11-05-1988

## Description

This invention relates to edit mode controllers and editing methods for operation with video signal recording and/or reproducing apparatuses.

When editing is effected with a long playing video tape using a conventional video tape recorder (VTR), it is often necessary to set the VTR into a so-called still mode or state in which a rotary head scans the same position on the tape. For example, when dubbing is performed using two VTRs, one of which reproduces a desired part of a video signal recorded on a video tape while the other records the reproduced video signal on a desired part of another video tape, it is necessary to search for a reproducing start point and a recording start point on the respective video tapes. Searching for the starting points on the video tapes is effected one by one by the two VTRs. Therefore, for example, if a search is being carried out for the recording start point in one VTR (used for recording) after the reproducing start point has been determined in the other VTR (used for reproducing), the latter VTR must wait in the still mode or state until the recording start point for the former VTR is determined.

A simple editing technique is known, for example from Japanese Patent Application Publication No. 55-139203, which utilises a servo mechanism associated with a tape advancement mechanism.

In general, since rotary heads arranged on a drum of the VTR are rotated to scan a magnetic tape, if the VTR is left for a long time in the still mode or state (in which the magnetic tape is stopped while the rotary heads are rotated), the part of the magnetic tape which is subjected to scanning by the heads has its magnetic layer damaged and, as a result, signals reproduced therefrom suffer from dropout. To deal with this problem, when the still state of the VTR has been continued for a predetermined period of time, for example six minutes, the VTR is automatically released from the still state to thereby protect the tape from deterioration.

If, while a search for a desired part on the tape to be reproduced during an editing operation by the VTR used for reproducing is being conducted, the period of six minutes elapses, the VTR used for recording is released from the still state and will run (move) its tape. Therefore, when the desired part to be reproduced is found, the VTR used for recording has already run its tape at a normal speed, so that it is necessary again to search for the recording start point on the tape in the VTR used for recording. Thus, if the VTR is released from the still state during an editing operation, it requires a long period of time to complete editing.

Japanese Patent Application Publication No. JP-A-60 083 268, an English-language abstract of which appears in Patent Abstracts of Japan, Vol. 9, No. 227, 13 September 1985 (P-388)[1950], discloses a reproducing apparatus operative to reproduce a video signal from a magnetic recording medium by means of a magnetic head operative to scan the medium, the apparatus comprising:
means for running the magnetic recording medium;
means for selecting a functional mode of the reproducing apparatus from among a plurality of functional modes including a still mode;
means for detecting whether or not the magnetic head has scanned the same position on the magnetic recording medium for a predetermined time when the apparatus is in the still mode; and
means for generating a command signal and supplying the command signal to the reproducing apparatus to move the magnetic head to a different track position on the magnetic recording medium when the detecting means detects that the magnetic head has scanned the same position on the magnetic recording medium for said predetermined period of time.

According to a first aspect of the invention there is provided an edit mode controller for operation with first and second recording and/or reproducing apparatuses operative to record and/or reproduce video signals on or from first and second magnetic recording media by means of magnetic heads which are arranged therein and are operative to scan the first and second magnetic recording media, the controller comprising:
means for running the first and second magnetic recording media;
means for detecting positions of the first and second magnetic recording media with respect to the magnetic heads of the first and second recording
and/or reproducing apparatuses;
means for selecting functional modes of the first and second recording and/or reproducing apparatuses from among a plurality of functional modes including a still mode;
means for detecting whether or not the magnetic head of at least one of the first and second recording and/or reproducing apparatuses has scanned the same position on the associated one of the first and second magnetic recording media for a predetermined period of time when said one apparatus is in the still mode; and
means for generating a command signal and supplying the command signal to at least said one of the first and second recording and/or reproducing apparatuses to move the magnetic head to a different track position on the magnetic recording medium when the detecting means detects that the magnetic head has scanned the same position on said one of the first and second magnetic recording media for said predetermined period of time.

According to a second aspect of the invention there is provided a method of editing video signals by using an edit mode controller operating with first and second recording and/or reproducing apparatuses operative to record and/or reproduce video signals on or from first and second magnetic recording media by means of magnetic beads which are arranged therein and are operative to scan the first and second magnetic recording media, the

method comprising the steps of: detecting positions of the first and second magnetic recording media with respect to the magnetic heads;
selecting functional modes of the first and second recording and/or reproducing apparatuses from among a plurality of functional modes including a still mode;
detecting whether or not the magnetic head of at least one of the first and second recording and/or reproducing apparatuses has scanned the same position on the associated one of the magnetic recording media for a predetermined period of time;
advancing the magnetic head of at least said one of the first and second recording and/or reproducing apparatuses to a different track position when it has been detected that the magnetic head has scanned the same position on the associated one of the magnetic recording media for said predetermined period of time; and
synchronising advancement of the first and second magnetic recording media with each other so as thereby to start a dubbing procedure from desired points on the first and second magnetic recording media.

A preferred embodiment of the present invention described herebelow is capable of protecting a magnetic recording medium (for example a magnetic tape) from being rubbed for an excessive time by a scanning magnetic head (for example one or mor rotary heads) of a recording and/or reproducing apparatus (for example a VTR), and yet is capable of easily returning the tape to an initial still or pause scanning position at which an editing operation should be started.

The invention will now be further described, by way of illustrative and non-limiting example, with reference to the accompanying drawings, in which like references designate like elements and parts throughout, and in which:
Figure 1 is a block diagram of an edit mode controller embodying the invention applied to recording and reproducing apparatus employing two VTRs;
Figures 2A and 2B are diagrams used to explain the operation of the edit mode controller shown in Fig. 1;
Figure 3 is a diagram showing scanning traces of heads of the recording and reproducing apparatus; and
Figure 4 is a flow chart showing the operation of the edit mode controller when a VTR is in a still mode or state.

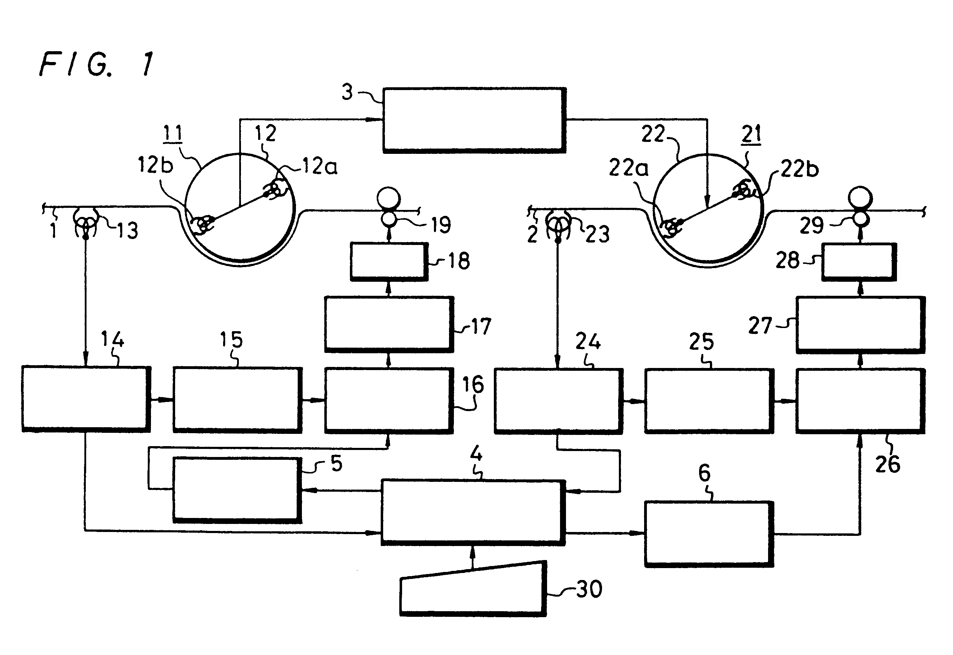

An edit mode controller embodying the present invention will now be described with reference to Figures 1 to 4. Referring first to Figure 1, the edit mode controller performs editing in such a manner that a video signal reproduced from a magnetic tape 1 in a first video tape recorder (VTR) 11 is recorded on a magnetic tape 2 in a second VTR 21. To be specific, video signals are reproduced alternately from the magnetic tape 1 by two rotary magnetic heads 12a, 12b, coupled to a rotary drum 12 in the first VTR 11, and are supplied to a video signal processing circuit 3 to be suitably processed for recording. The video signals from the circuit 3 are sent to the second VTR 21 and are recorded alternately on the magnetic tape 2 by rotary magnetic heads 22a, 22b coupled to a rotary drum 22. Each of the rotary drums 12, 22 of the first and second VTRs 11, 21 has an erasing head (not shown in Figure 1) coupled thereto. Respective servo systems provided in the VTRs 11, 21 supply control (CTL) signal reproducing circuits 14, 24 with control (CTL) signals which are recorded on control tracks of the respective magnetic tapes 1, 2 and are reproduced by fixed magnetic heads 13, 23 provided in the respective VTRs 11, 21. The CTL signals are waveform-shaped by the respective CTL signal reproducing circuits 14, 24 and then supplied to counters 15, 25 and also to a system controller 4. Each of the counters 15, 25 counts the number of supplied CTL signals and supplies a signal indicative of the counted value to microprocessors 16, 26, respectively.

The system controller 4 is supplied with a functional mode selection signal which is indicative of a mode selected from among a plurality of available modes, for example from normal playback, recording, still and fast review modes, etc. The mode selection signal is supplied from an edit mode selection keyboard 30 externally connected to the system controller 4.

The system controller 4 supplies the microprocessors 16, 26 with command signals through command signal generator circuits 5, 6 so as to advance each of the magnetic tapes 1, 2, in synchronism with generation of the CTL signals, in one of various modes such as still, slow motion playback and cue/review playback. The command signals are such as to cause the VTRs to adopt various tape running states in response to an operation selected by an operator. In addition, after a command signal has been delivered to a VTR to put the VTR into a still playback mode, if the still state continues for six minutes, another command signal is delivered to the VTR to advance the video tape 1 or 2 by an amount equal to four tracks (that is, if the CTL signal corresponds to the number of frames of the tracks, until the counter 25 counts two CTL signals) and then again stops advancement of the tape. Thus, the VTR is again in a still state, though the tape has been advanced by four tracks (corresponding to the images of four fields). Then, the microprocessors 16, 26 supply respective capstan servo circuits 17, 27 with a servo control signal by which the capstan servo circuits 17, 27 control respective capstan motors 18, 28 which respectively drive capstans 19, 29 so as to thereby to control the advancement of the tapes 1, 2.

By virtue of the contruction described above, the system controller 4 detects the CTL signals from the respective VTRs 11, 21, supplies the microprocessors 16, 26 with command signals, and thereby synchronises the VTRs 11, 21 with each other. By thus synchronising the VTRs 11, 21 with each other, the VTR 11 reproduces the video signals recorded on the video tape 1 while the VTR 21 records on the video tape 2 desired parts of the information recorded on the video tape 1, thereby to carry out editing.

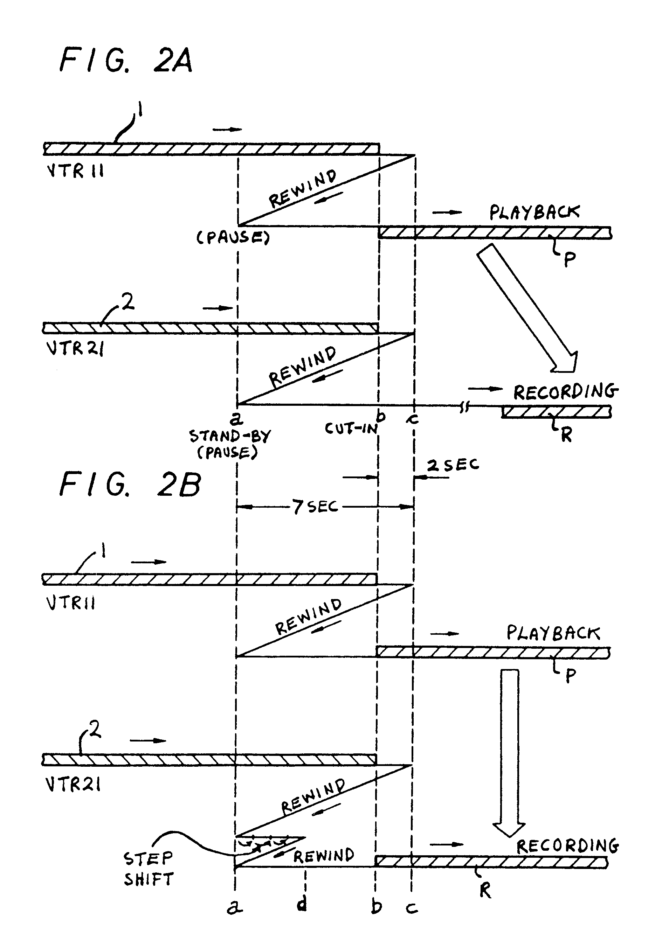

As an example of an editing procedure, a method of calling up an edit point or start point of the tape upon starting editing will now be described with reference to Figures 2A to 4.

Figure 2A shows how tapes are controlled in a previously proposed editing procedure. First, a recording start point of the video tape 2 is determined by the VTR 21. As shown in Figure 2A, if it is assumed that a portion of the contents of the video tape 1 is to be recorded on a portion after a cut-in point or edit start point b of the video tape 2, the system controller 4 supplies the microprocessor 26 with a command signal to return the video tape 2, from a point c immediately after when the point b is detected by the counter 25 counting a predetermined number of the CTL signals (the distance between the points b and c corresponding, for example, to 2 seconds) to a point several seconds before the point c (for example 7 seconds before, that is 5 seconds before the recording or dubbing start point). Then, the VTR 21 stands by in a still state or pause state at a stand-by point (preroll point) a to which the tape 2 is rewound. Next, a reproducing start point of the video tape 1 is determined by the VTR 11, while the VTR 21 is left in the stand-by state. If it is assumed that, similarly to the video tape as shown in Fig. 2A, a portion after a point b of the video tape 1 is to be recorded on the video tape 2, the system controller 4 supplies the microprocessor 16 with a command signal to rewind the video tape 1, from a point c immediately after when the point b is detected by the counter 25 counting a predetermined number of the CTL signals (the distance between the points b and c corresponding, for example, to 2 seconds) to a point several seconds before the point c (for example 7 seconds before, that is 5 seconds before the recording start point). Then, the VTR 11 is again set into the still state at the stand-by point a to which the tape 1 was rewound. When the VTRs 11, 21 are both in the still state with the tapes 1, 2 stopped at the point a, the system controller 4 sends command signals to both the microprocessors 16, 26 to start advancement of the video tapes 1, 2, in synchronism with each other. Dubbing is effected from the video tape 1 to the video tape 2 from the edit start point b (which is, for example, 5 seconds after the point a) to a desired point. The dubbing is started from the point b, after the tape has been advanced by, for example, 5 seconds, that is from the point a to the point b, because phase arrangement is required to synchronise the VTRs 11, 21 with each other. Further, the time period of 2 seconds between the points b and c is a period of over-run due to the inertia of the tape advancement system.

During an editing procedure as described above, if six minutes elapse with the VTR 21 for recording on the tape 2 left in the still or pause state, while a search is being made for a desired edit point or reproducing start point on the tape 1, the VTR 21 is released from the still or pause state so that the tape 2 runs at a normal speed or at a slow speed for protecting the tape 2 against being damaged. Therefore, when the cut-in point b on the tape 1 is determined, the tape 2 already has been advanced. Accordingly, a recording area R of the tape 2 for the playback signal, indicated by hatching in Figure 2A, is shifted from the cut-in point b, as shown in Figure 2A.

A method embodying the present invention for calling up an edit point will now be explained with reference to Figure 2B. Even if it takes a long period of time to determine the cut-in point b on the tape 1, the tape 2 is advanced only by a predetermined amount, and then stopped again, every time a predetermined unit or period of time (for example six minutes) elapses; that is, the tape 2 is advanced in stepwise manner, namely step by step. Figure 2B shows a case in which the tape was advanced and stopped four times, that is it took 24 minutes (6 mins. × 4) to determine the cut-in point b of the tape 1, the stepwise shift or advancement of the tape 2 being clearly indicated. To be specific, in response to a command signal supplied from the system controller 4, the VTR 21 advances the tape 2 in steps each corresponding only to an amount equal to four tracks. Arrows in Figures 2A and 2B indicate the directions in which the tapes are advanced.

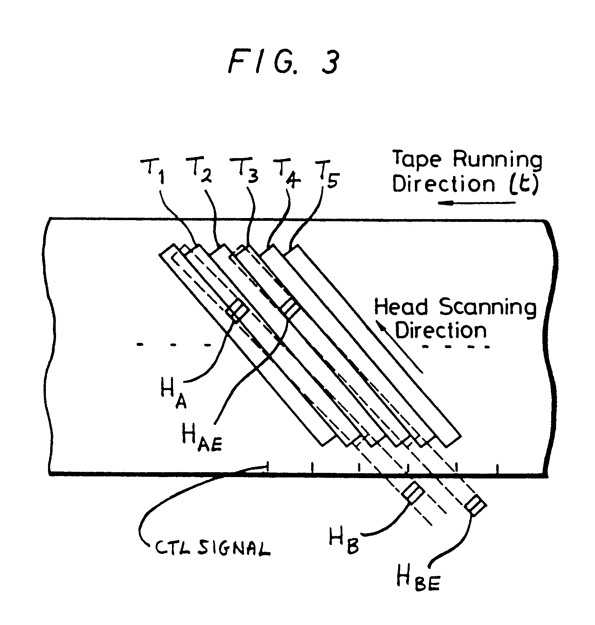

Referring to Figure 3, the video tapes 1, 2 have a plurality of oblique tracks T₁, T₂, T₃, T₄, T₅ etc. on which video signals are recorded. Let it now be assumed that the VTR 21 is in the still state in which the track T₁ is being scanned by two rotary magnetic heads H_{A}, H_{B}, so that video signals can be recorded thereon or video signals recorded thereon can be reproduced by the heads H_{A}, H_{B}, and, simultaneously, the track T₃ (two tracks behind the track T₁) is being scanned by rotary erasing heads H_{AE}, H_{BE} so that the video signals recorded thereon can be erased by the erasing heads H_{AE}, H_{BE}. When six minutes have elapsed in the above-described condition, the tape is advanced by four tracks in a tape running (forward) direction t, and then stopped again. Now, the VTR 2 is again in the still state, in this case with the track T₅ being scanned by the rotary heads H_{A}, H_{B} and a track T₇ being scanned by the rotary erasing heads H_{AE}, H_{BE}.

As described above, when a time period of six minutes has elapsed while the VTR 21 is left in the still state, the VTR 21 is released from the still state to advance the tape 2 by four tracks and then again set into the still state. This operation is repeated every six minutes. Referring again to Figure 2B, when the edit point on the tape 1 is determined after the tape 2 has been advanced from the stand-by point a to a point d by the stepwise advancement operation, the tape 2 is returned from the advanced point d to the stand-by point a. It is therefore possible to run the video tapes 1, 2 from the stand-by point a at the same time to thereby start a dubbing procedure from the point b, at which the two VTRs 11, 21 should have been synchronised with each other.

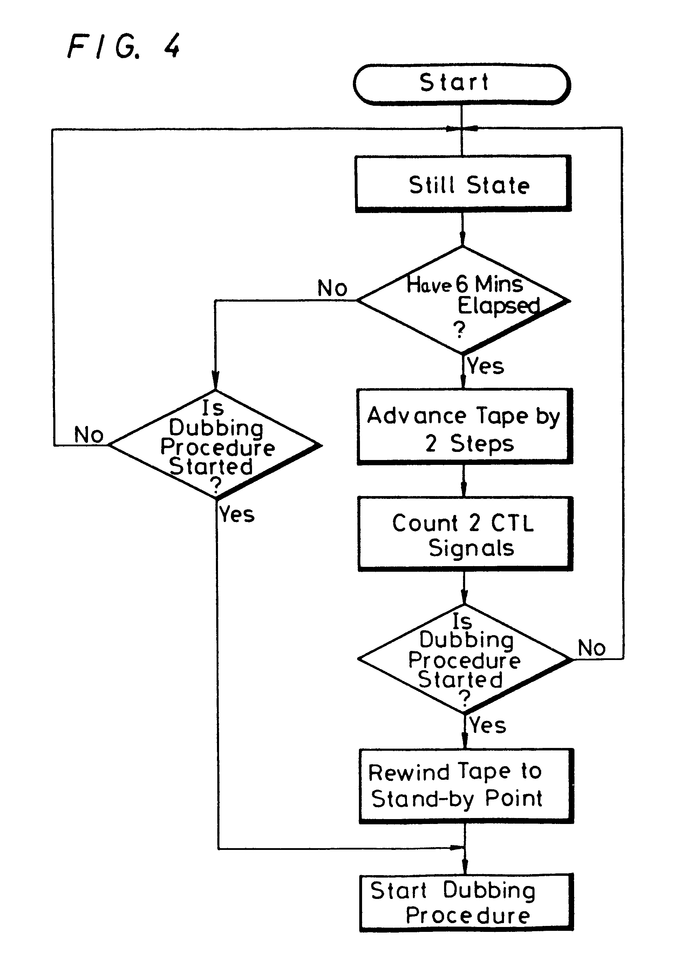

A program explaining judgements effected by the system controller 4 while the VTR 21 is in the still state will now be described with reference to a flow chart shown in Fig. 4. When the VTR 21 is set into the still state, it is judged whether or not a set period of time, for example six minutes, has elapsed. If the answer is no, the VTR 21 is maintained in the still state until six minutes have elapsed from the start of editing (dubbing). On the other hand, if the answer is yes, that is six minutes have elapsed, the system controller 4 supplies the microprocessor 26 with a command signal to run the tape 2 until the counter 25 counts two CTL signals, that is until the tape 2 is advanced by four tracks, and then to stop the tape 2 again. If it takes a lot of time to determine a desired reproducing point on the tape 1, the above step advancement operation, that is stop - run - stop - run, is repeated until the reproducing start point on the tape 1 is determined. If the dubbing procedure is started after advancement of the tape 2 by four tracks, the system controller 4 commands the VTR 21 first to rewind the tape 2 to the stand-by point a and then to run the tape 2 so as thereby to start the dubbing procedure from the cut-in point b of the tapes 1, 2.

Incidentally, if an accurate linkage between two different images is not required in an editing operation, the advanced tape may not be rewound to the stand-by point a but may run from the point d, whereby the linkage can be, to some degree, satisfactorily made.

According to the above-described edit mode controller, since the rotary heads do not scan the same tracks on a tape for more than a predetermined period of time, for example six minutes, the tape is protected against being damaged. Further, every time the predetermined period of time elapses before an edit point on the original tape is determined, the tape to be edited is advanced only by a predetermined step or amount and then stopped again. Therefore, the tape is not allowed to keep running; that is, the tape is not advanced far from the point at which the VTR was set into the still state. Accordingly, the determined cut-in point can be found easily, and also it does not take much time to search for the cut-in point. Moreover, the tape is automatically rewound to the stand-by point a when the dubbing procedure is started, so that the operator does not have to search for the stand-by point a.

In the above described embodiment, reference was made to a case in which the VTR for recording is in the still state. However, the same operation can be effected when the cut-in point of the video tape to be recorded is being determined while the VTR for reproducing is left in the still state. Further, the amount by which the tape is advanced every time the predetermined period of time has elapsed can be determined arbitrarily.

Also, in the above-described embodiment, the CTL signal is used to detect the tape position. However, the method of detecting the tape position is not limited to this: any other signal corresponding to the CTL signal also can be used for this purpose.

## Claims

1. An edit mode controller for operation with first and second recording and/or reproducing apparatuses (11, 21) operative to record and/or reproduce video signals on or from first and second magnetic recording media (1, 2) by means of magnetic heads (12a, 12b, 22a, 22b) which are arranged therein and are operative to scan the first and second magnetic recording media (1, 2), the controller comprising:
means for running the first and second magnetic recording media (1, 2);
means (13, 14, 23, 24) for detecting positions of the first and second magnetic recording media (1, 2) with respect to the magnetic heads (12a, 12b, 22a, 22b) of the first and second recording and/or reproducing apparatuses (11, 21);
means (30) for selecting functional modes of the first and second recording and/or reproducing apparatuses (11, 21) from among a plurality of functional modes including a still mode;
means for detecting whether or not the magnetic head (12a, 12b, 22a, 22b) of at least one of the first and second recording and/or reproducing apparatuses (11, 21) has scanned the same position on the associated one of the first and second magnetic recording media (1, 2) for a predetermined period of time when said one apparatus is in the still mode; and
means (4, 5, 16, 6, 26) for generating a command signal and supplying the command signal to at least said one of the first and second recording and/or reproducing apparatuses to move the magnetic head to a different track position on the magnetic recording medium when the detecting means detects that the magnetic head has scanned the same position on said one of the first and second magnetic recording media (1, 2) for said predetermined period of time.

2. An edit mode controller according to claim 1, which is operative such that at least said one of the first and second magnetic recording media (1, 2) is advanced and stopped step by step each time that said predetermined period of time has elapsed.

3. An edit mode controller according to claim 2, which is operative to move at least said one of the first and second magnetic recording media (1, 2) to the position at which said one medium had been stopped prior to said step by step movement.

4. A method of editing video signals by using an edit mode controller operating with first and second recording and/or reproducing apparatuses (11, 21) operative to record and/or reproduce video signals on or from first and second magnetic recording media (1, 2) by means of magnetic heads (12a, 12b, 22a, 22b) which are arranged therein and are operative to scan the first and second magnetic recording media (1, 2), the method comprising the steps of:
detecting positions of the first and second magnetic recording media (1, 2) with respect to the magnetic heads (12a, 12b, 22a, 22b);
selecting functional modes of the first and second recording and/or reproducing apparatuses (11, 21) from among a plurality of functional modes including a still mode;
detecting whether or not the magnetic head (12a, 12b, 22a, 22b) of at least one of the first and second recording and/or reproducing apparatuses (11, 21) has scanned the same position on the associated one of the magnetic recording media for a predetermined period of time;
advancing the magnetic head (12a, 12b, 22a, 22b) of at least said one of the first and second recording and/or reproducing apparatuses (11, 21) to a different track position when it has been detected that the magnetic head has scanned the same position on the associated one of the magnetic recording media for said predetermined period of time; and
synchronising advancement of the first and second magnetic recording media (1, 2) with each other so as thereby to start a dubbing procedure from desired points (b) on the first and second magnetic recording media (1, 2).

5. A method according to claim 4, comprising moving at least said one of the first and second magnetic recording media (1, 2) to the position at which the medium had been stopped prior to said advancement of said medium and then driving the first and second magnetic recording media in synchronism with each other.

## Patentansprüche

1. Steuereinrichtung zur Datenkopierung (Schneiden) für den Betrieb mit ersten und zweiten Aufzeichnungs- und/oder Wiedergabegeräten (11, 21), die betreibbar sind zur Aufzeichnung und/oder Wiedergabe von Videosignalen auf oder von ersten und zweiten magnetischen Aufzeichnungsträgern (1, 2) mit Hilfe von Magnetköpfen (12a, 12b, 22a, 22b). die darin angeordnet und zum Abtasten der ersten und zweiten magnetischen Aufzeichnungsträger (1, 2) betreibbar sind, wobei die Steuereinrichtung enthält:
Mittel zum Abfahren der ersten und zweiten magnetischen Aufzeichnungsträger (1, 2); Mittel (13, 14, 23, 24) zum Erkennen von Positionen der ersten und zweiten magnetischen Aufzeichnungsträger (1, 2) bezüglich der Magnetköpfe (12a, 12b, 22a, 22b) der ersten und Zweiten Aufzeichnungs- und/oder Wiedergabegeräte (11, 21);
Mittel (30) zur Auswahl von Funktionsmoden der ersten und zweiten Aufzeichnungsund/oder Wiedergabegeräte (11, 21) aus einer Mehrzahl von Funktionsmoden einschließlich eines Standbildmodus heraus;
Mittel zur Detektion, ob der Magnetkopf (12a, 12b, 22a, 22b) wenigstens eines der ersten und zweiten Aufzeichnungs- und/oder Wiedergabegeräte (11,21) dieselbe Position auf dem zugeordneten einen der ersten und zweiten magnetischen Aufzeichnungsträger (1, 2) während einer vorbestimmten Zeitperiode, wenn besagtes eine Gerät im Standbildmodus ist, abgetastet hat oder nicht: und
Mittel (4, 5, 16, 6, 26) zur Erzeugung eines Befehlssignals und zum Zuführen des Befehlssignals zu wenigstens dem einen der ersten und zweiten Aufzeichnungs- und/oder Wiedergabegeräte, um den Magnetkopf zu einer anderen Spurposition auf dem magnetischen Aufzeichnungsträger zu bewegen, wenn das Detektionsmittel feststellt, daß der Magnetkopf dieselbe Position auf besagtem einen der ersten und zweiten magnetischen Aufzeichnungsträger (1, 2) wahrend besagter vorbestimmter Zeitperiode abgetastet hat.

2. Steuereinrichtung zur Datenkopietung (Schneiden) nach Anspruch 1, die so betreibbar ist, daß wenigstens besagter eine der ersten und zweiten magnetischen Aufzeichnungsträger (1, 2) schrittweise jeweils zu der Zeit beschleunigt und angehalten wird, zu der besagte vorbestimmte Zeitperiode vergangen ist.

3. Steuereinrichtung zur Datenkopiervng (Schneiden) nach Anspruch 2, die betreibbar ist, um wenigstens besagten einen der ersten und zweiten magnetischen Aufzeichnungsträger (1, 2) zu einer Position zu bewegen, bei der besagter eine Träger vor der besagten schrittweisen Bewegung angehalten wurde.

4. Verfahren zum Kopieren (Schneiden) von Videosignalen unter Benutzung einer Steuereinrichtung zur Datenkopierung (Schneiden), die betrieben wird mit ersten und zweiten Aufzeichnungs- und/oder Wiedergabegeräten (11, 21), die betreibbar sind zur Aufzeichnung und/oder Wiedergabe von Videosignalen auf oder von ersten und zweiten magnetischen Aufzeichnungsträgern (1, 2) mit Hilfe von Magnetköpfen (12a, 12b, 22a, 22b), die darin angeordnet und zum Abtasten der ersten und zweiten magnetischen Aufzeichnungsträger (1, 2) betreibbar sind, wobei das Verfahren die Schritte enthält:
Detektion von Positionen der ersten und zweiten magnetischen Aufzeichnungsträger (1,2) bezüglich der Magnetköpfe (12a, 12b, 22a, 22b);
Auswahl von Funktionsmoden der ersten und zweiten Aufzeichnungs- und/oder Wiedergabegeräte (11, 21) aus einer Mehrzahl von Funktionsmoden einschließlich eines Standbildmodus heraus;
Detektion, ob der Magnetkopf (12a, 12b, 22a, 22b) wenigstens eines der ersten und zweiten Aufzeichnungs- und/oder Wiedergabegeräte (11, 21) dieselbe Position auf dem zugeordneten einen Aufzeichnungsträger während einer vorbestimmten Zeitperiode abgetastet hat oder nicht;
Vorrücken des Magnetkopfes (12a, 12b, 22a, 22b) wenigstens des besagten einen der ersten und zweiten Aufzeichnungs- und/oder Wiedergabegeräte (11, 21) zu einer anderen Spurposition, wenn festgestellt wurde, daß der Magnetkopf dieselbe Position auf dem zugeordneten einen magnetischen Aufzeichnungsträger während besagter vorbestimmter Zeitperiode abgetastet hat; und
Synchronisieren des Vorrückens der ersten und zweiten magnetischen Aufzeichnungsträger (1, 2) miteinander, um dadurch einen Kopiervorgang von gewünschten Punkten (b) auf den ersten und zweiten magnetischen Aufzeichnungsträgem aus zu starten.

5. Verfahren nach Anspruch 4, das ein Bewegen wenigstens des besagten einen der ersten und zweiten magnetischen Aufzeichnungsträger (1, 2) zu einer Position, bei der der Träger vor dem besagten Vorrücken des Trägers angehalten wurde, und dann ein Ansteuern der ersten und zweiten magnetischen Aufzeichnungsträger in Synchronisation miteinander enthält.

## Revendications

1. Contrôleur de mode d'édition pour son fonctionnement avec des premier et second appareils d'enregistrement et/ou de reproduction (11,21) servant à enregistrer et/ou reproduire des signaux vidéo sur ou à partir de premier et second supports magnétiques d'enregistrement (1,2) au moyen de têtes magnétiques (12a,12b, 22a,22b) qui sont disposées dans ceux-ci et servent à balayer les premier et second supports magnétiques d'enregistrement (1,2), le contrôleur comprenant:
des moyens pour actionner les premier et second supports magnétiques d'enregistrement (1,2);
des moyens (13,14,23,24) pour détecter les positions des premier et second supports magnétiques d'enregistrement (1,2) par rapport aux têtes magnétiques (12a,12b,22a,22b) des premier et second appareils d'enregistrement et/ou de reproduction (11,21);
un moyen (30) pour sélectionner des modes fonctionnels des premier et second appareils d'enregistrement et/ou de reproduction (11,21) parmi une pluralité de modes fonctionnels incluant un mode fixe;
des moyens pour détecter si la tête magnétique (12a,12b,22a,22b) d'au moins un des premier et second appareils d'enregistrement et/ou de reproduction (11,21) a ou non balayé la même position sur le support associé des premier et second supports magnétiques d'enregistrement (1,2) pendant une période de temps prédéterminée où ledit appareil est dans le mode fixe; et
des moyens (4,5,16,6,26) pour générer un signal de commande et pour fournir le signal de commande à au moins ledit des premier et second appareils d'enregistrement et/ou de reproduction afin de déplacer la tête magnétique jusqu'à une position de piste différente sur le support magnétique d'enregistrement quand le moyen détecteur détecte que la tête magnétique a balayé la même position sur ledit des premier et second supports magnétiques d'enregistrement (1,2) pendant ladite période de temps prédéterminée.

2. Contrôleur de mode d'édition selon la revendication 1, qui est actif de telle sorte qu'au moins ledit des premier et second supports magnétiques d'enregistrement (1,2) est avancé et arrêté pas-à-pas chaque fois que ladite période de temps prédéterminée s'est écoulée.

3. Contrôleur de mode d'édition selon la revendication 2, qui est actif pour déplacer au moins ledit des premier et second supports magnétiques d'enregistrement (1,2) jusqu'à la position à laquelle ledit support a été arrêté avant ledit mouvement pas-à-pas.

4. Méthode d'édition de signaux vidéo par la mise en oeuvre d'un contrôleur de mode d'édition fonctionnent avec des premier et second appareils d'enregistrement et/ou de reproduction (11,21) servant à enregistrer et/ou reproduire des signaux vidéo sur ou à partir de premier et second supports magnétiques d'enregistrement (1,2) au moyen de têtes magnétiques (12a,12b,22a,22b) qui sont disposées dans ceux-ci et qui servent à balayer les premier et second supports magnétiques d'enregistrement (1,2), la méthode comprenant les étapes qui consistent à:
détecter les positions des premier et second supports magnétiques d'enregistrement (1,2) par rapport aux têtes magnétiques (12a,12b,22a,22b);
sélectionner des modes fonctionnels des premier et second appareils d'enregistrement et/ou de reproduction(11,21) parmi une pluralité de modes fonctionnels incluant un mode fixe;
détecter si la tête magnétique (12a,12b,22a,22b) d'au moins un des premier et second appareils d'enregistrement et/ou de reproduction (11,21) a ou non balayé la même position sur le support associé des supports magnétiques d'enregistrement pendant une période de temps prédéterminée;
faire avancer la tête magnétique (12a,12b,22a,22b) d'au moins ledit des premier et second appareils d'enregistrement et/ou de reproduction (11,21) jusqu'à une position de piste différente quand il a été détecté que la tête magnétique a balayé la même position sur le support associé des supports magnétiques d'enregistrement pendant ladite période de temps prédéterminée;et à
synchroniser l'avancement des premier et second supports magnétiques d'enregistrement (1,2) l'un par rapport à l'autre de manière à déclencher ainsi une procédure de doublage à partir de points voulus (b) sur les premier et second supports magnétiques d'enregistrement (1,2).

5. Méthode selon la revendication 4, comprenant l'étape qui consiste à déplacer au moins ledit des premier et second supports magnétiques d'enregistrement (1,2) jusqu'à la position à laquelle le support a été arrêté avant ledit avancement dudit support et à entraîner ensuite les premier et second supports magnétiques d'enregistrement en synchronisme l'un par rapport à l'autre.
